# EUROPEAN PATENT APPLICATION

(11) **EP 3 819 569 A1**
(43) Date of publication of application: **12.05.2021**
(21) Application number: 19851507.4
(22) Date of filing: 01.08.2019
(51) Int. Cl.: F25D 23/00, F25D 23/04

(54) **REFRIGERATION SYSTEM**

(30) Priority: 23.08.2018 JP 2018156706
(71) Applicant: PHC Holdings Corporation, Tokyo 105-8433 (JP)
(72) Inventor: XU, Linxiao, Toon-shi, Ehime 791-0395 (JP); WAKABAYASHI, Naoki, Toon-shi, Ehime 791-0395 (JP); ASANO, Takuya, Toon-shi, Ehime 791-0395 (JP); TAIRA, Keisuke, Toon-shi, Ehime 791-0395 (JP)
(74) Representative: Grünecker Patent- und Rechtsanwälte PartG mbB
(86) International application number: PCT/JP2019/030154
(87) International publication number: WO 2020/039874

(57) **Abstract**

A freezing system includes a freezing device and an acquisition unit. The freezing device includes: a holding room for holding a plurality of containers, the plurality of containers each having an RF tag attached thereto, containing a material to be cooled, and being held at corresponding one of predetermined positions; and a plurality of antennas provided inside the holding room each corresponding to one of the predetermined positions, the plurality of antennas each being configured to receive information stored in the RF tag. The acquisition unit acquires information received by the plurality of antennas, with the plurality of containers being held in the holding room.

## Description

### [Technical Field]

The present disclosure relates to a freezing system.

### [Background Art]

When a plurality of containers for holding specimens are held in a freezer, the containers are managed such that barcodes for respectively identifying the containers are attached thereto (for example, Patent Literature 1).

### [Citation List]

### [Patent Literature]

Patent Literature 1: Japanese Patent Application Publication No.2011-185893

### [Summary of Invention]

### [Technical Problem]

Generally, in order for a user to grasp correct information about the containers held inside the freezer, it is necessary to take such a container out of the freezer and scan its barcode. However, when the container containing a specimen is taken out of the freezer, the temperature of the specimen in the container rises and the quality of the specimen may deteriorate.

The present disclosure has been achieved in view of an existing issue as described above, and is directed to provision of a freezing system that allows a user to obtain information to identify containers with the containers being kept in a freezer.

### [Solution to Problem]

A primary aspect of the present disclosure is a freezing system comprising: a freezing device comprising: a holding room for holding a plurality of containers, the plurality of containers each having an RF tag attached thereto; containing a material to be cooled; and being held at corresponding one of predetermined positions; and a plurality of antennas provided inside the holding room each corresponding to one of the predetermined positions, the plurality of antennas each being configured to receive information stored in the RF tag; and an acquisition unit configured to acquire information received by the plurality of antennas, with the plurality of containers being held in the holding room.

### [Advantageous Effects of Invention]

According to the present disclosure, it is possible to obtain information to identify containers with the containers kept in a freezer.

### [Brief Description of Drawings]

Fig. 1 is a block diagram for explaining an overview of a freezing system 10;
Fig. 2 is a perspective view of a freezer 20 with an insulated door open;
Fig. 3 is a diagram for explaining a structure of a freezer 20;
Fig. 4 is a cross-sectional view of a freezer 20 taken along a line X-X of Fig. 3;
Fig. 5 is a diagram illustrating a container 80 and a radio-frequency (RF) tag 85;
Fig. 6 is a diagram for explaining a holding box 90 and a holding member 100;
Fig. 7 is a diagram for explaining a positional relationship between a holding member 100a being held in a holding room 30a and a plate-shaped member 300a;
Fig. 8 is a diagram for explaining antennas 400a to 400d;
Fig. 9 is a diagram for explaining details of an insulated room 31;
Fig. 10 is a diagram for explaining lines connected to a switching circuit 50 and an electric heater 51;
Fig. 11 is a flowchart illustrating an example of an inventory process for containers 80 held in a holding room 30a;
Fig. 12 is a diagram for explaining a holding member 101;
Fig. 13A is a diagram for explaining a plate-shaped member 310 located under a holding member 102;
Fig. 13B is a diagram for explaining a plate-shaped member 310 located under a holding member 102;
Fig. 14 is a diagram illustrating an example of a holding room 30c;
Fig. 15 is a diagram illustrating a container 81 and an RF tag 85;
Fig. 16A is a diagram for explaining a plate-shaped member 311 located above a holding member 102;
Fig. 16B is a diagram for explaining a plate-shaped member 311 located above a holding member 102;
Fig. 17 is a diagram illustrating an example of a holding room 30d;
Fig. 18 is a diagram illustrating an example of a holding device 70; and
Fig. 19 is a diagram illustrating an example of a holding device 71.

### [Description of Embodiments]

At least the following will become apparent from the description herein and in the accompanying drawings.

### === Embodiments ===

### <<<Overview of Freezing System 10>>>

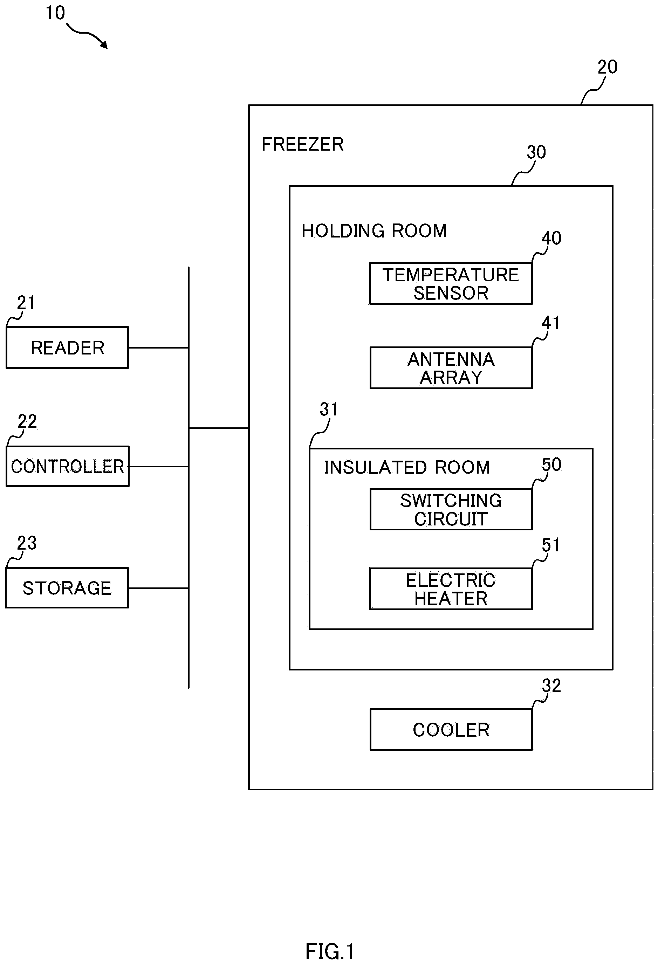

Fig. 1 is a block diagram for explaining an overview of a freezing system 10. The freezing system 10 is for freezing and storing blood, cells, tissues, and other test specimens (hereinafter, referred to as a "specimen" or "specimens") obtained from a human body and managing information about containers (described below) containing specimens (materials to be cooled).

The freezing system 10 includes a freezer 20, a reader 21, a controller 22, and a storage 23. In Fig. 1, some components of the freezer 20 are omitted for convenience.

The freezer 20 (freezing device) is a device (ultra-low temperature freezer) capable of maintaining the interior temperature down to, for example, -80°C (a predetermined temperature). The freezer 20 has a holding room 30, an insulated room 31 and a cooler 32.

The holding room 30 is a space for holding containers containing specimens. The insulated room 31 is an insulated space defined by dividing the holding room 30 with an insulating material.

The holding room 30 has a temperature sensor 40 for measuring the temperature of the holding room 30 and an antenna array 41 that receives information from RF tags (described below) attached to containers. The antenna array 41 includes multiple antennas (described below).

The insulated room 31 has a switching circuit 50 used to operate only some of the antennas in the antenna array 41, and an electric heater 51 to heat the switching circuit 50.

The cooler 32 is for cooling the holding room 30 to a predetermined temperature and comprises, for example, a compressor, a condenser, and an evaporator which are not illustrated in the figures.

The reader 21 (acquisition unit) is a device (reader) that acquires information on RF tags attached to the containers via antennas connected to the switching circuit 50.

The controller 22 is for organizing and controlling the freezing system 10. For example, the controller 22 sets the temperature of the freezer 20, selects an antenna or antennas to be connected to the switching circuit 50, and controls the reader 21.

The storage 23 stores various programs to be executed by the controller 22, pieces of information about specimens respectively associated with identification numbers for the RF tags, and information indicative of a temperature of the holding room 30, and other information.

### <<<Overview of Freezer 20>>>

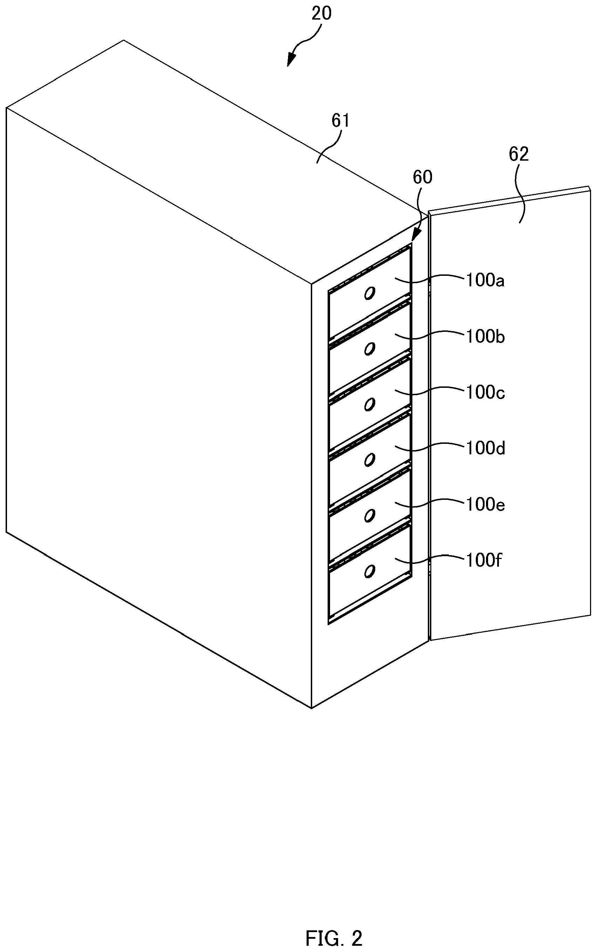

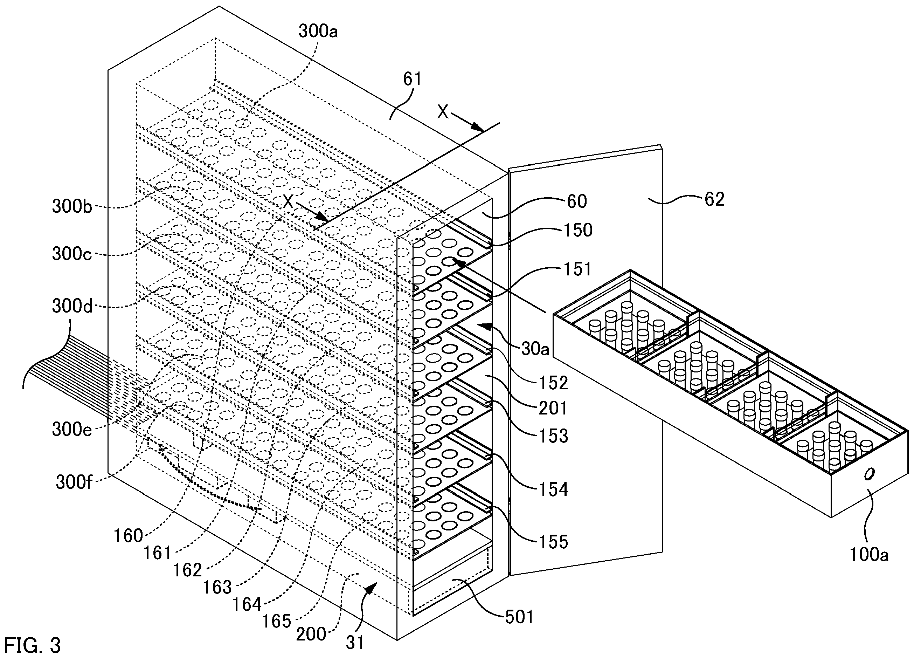

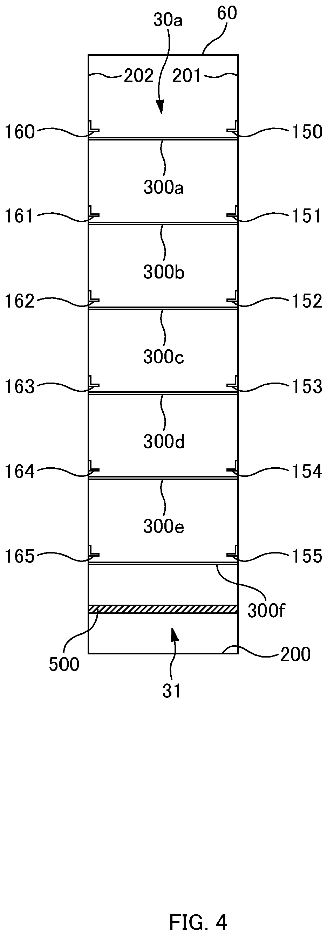

Fig. 2 is a perspective view of the freezer 20 with an insulated door open. Fig. 3 is a diagram for explaining a structure of the freezer 20. Fig. 4 is a cross-sectional view of the freezer 20 taken along a line X-X of Fig. 3. In Figs. 2 to 4, for the purpose of facilitating the understanding of the structure of the freezer 20, some components of the freezer 20 (such as the cooler 32 and the temperature sensor 40) are omitted.

The freezer 20 has an inner chamber 60, an outer chamber 61, and an insulated door 62. The inner chamber 60 is a rectangular parallelepiped box-shaped member having an opening in front through which a holding member 100 (described below) for holding a plurality of containers can be taken in and out of the inner chamber 60. The interior of the inner chamber 60, that is, the space inside the inner chamber 60 serves as the holding room 30.

The outer chamber 61 is a rectangular parallelepiped box-shaped member surrounding the inner chamber 60. Similarly to the inner chamber 60, the outer chamber 61 has an opening in front through which the holding member 100 is taken in and out of the outer chamber. An insulating material and/or the like (not illustrated) is provided between the inner chamber 60 and the outer chamber 61.

The insulated door 62 is provided at the front of the freezer 20 for hermetically closing the holding room 30.

### <<<Details of Containers 80, Holding Boxes 90, and Holding Member 100>>>

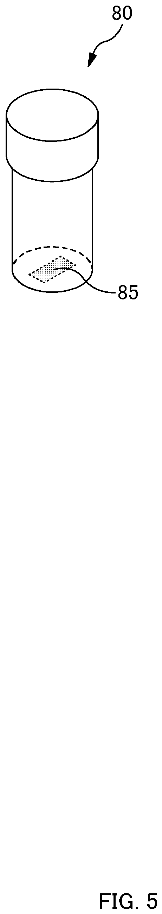

Fig. 5 is a diagram illustrating an example of a container 80 for holding a specimen (not illustrated). The container 80 is a cylindrical container with a radio-frequency (RF) tag 85 attached to the bottom thereof. In an embodiment of the present disclosure, a removable lid for hermetically closing the container 80 is attached to the container 80.

The RF tag 85 is a passive tag that transmits an identification code (a unique piece of identification information stored in the RF tag 85) when it receives, for example, radio waves from an antenna. The identification code is, for example, a data representing a 5-digit number.

In an embodiment of the present disclosure, by way of example, information about a specimen held in the container 80 is stored in the storage 23 with association to an identification code. Specifically, by way of example, when a specimen held in a container 80a is "blood obtained from a subject A" and a storage period of time is "two years," these pieces of information are stored in the storage 23 together with an identification code (e.g., "00001") for an RF tag 85a attached to the container 80a.

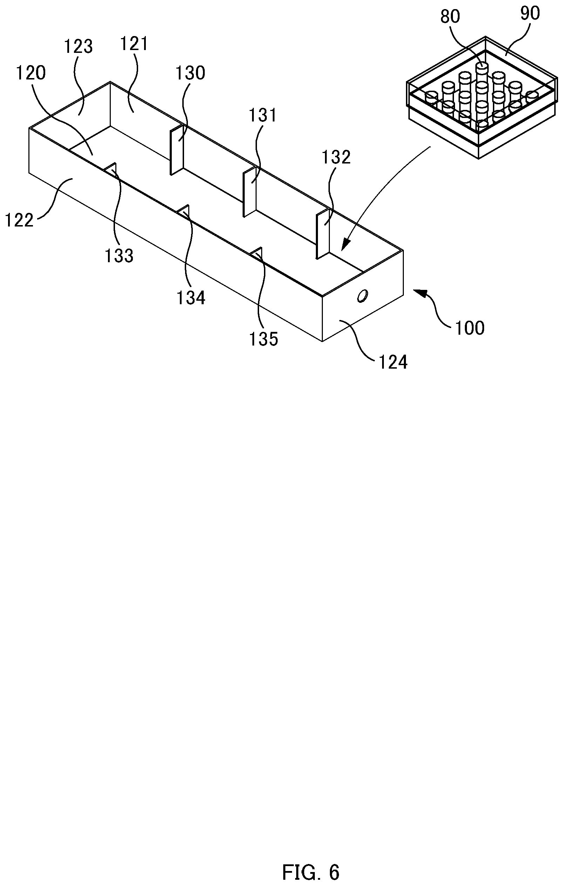

Fig. 6 is a diagram for explaining a holding box 90 and the holding member 100. The holding box 90 has 16 predetermined recesses (not illustrated) formed in its inner surface into which containers 80 are insertable one for each. Thus, the holding box 90 can hold 16 containers 80a to 80p separately. The holding box 90 has a removable lid attached thereto. In an embodiment of the present disclosure, the holding box 90 can hold 16 containers 80, for example, but the number of containers is not limited thereto.

The holding member 100 is a rectangular parallelepiped box-shaped member having an opening in top. The holding member 100 can hold four holding boxes 90.

The holding member 100 is defined by five flat plates in total: a bottom plate 120, side plates 121 and 122, a back plate 123, and a front plate 124. The holding member 100 is provided with partitioning plates 130 to 135 for allowing the holding boxes 90 to be held at predetermined holding positions in the holding member 100.

Specifically, the partitioning plates 130 to 132 are equally spaced along the longitudinal direction of the side plate 121 extending vertically from the bottom plate 120.

Likewise, the partitioning plates 133 to 135 extend vertically from the bottom plate 120 and are equally spaced along the longitudinal direction of the side plate 122 facing the side plates 121.

Since the partitioning plates 133 to 135 are provided at positions facing the partitioning plates 130 to 132, respectively, four spaces are formed in the holding member 100. In an embodiment of the present disclosure, the dimensions of the holding member 100 and the positions of the partitioning plates 130 to 135 are determined such that a holding box 90, after once being placed in one of the four compartments, will not move except in a direction perpendicular to the bottom plate 120.

In an embodiment of the present disclosure, the holding box 90 can hold 16 containers 80, and the holding member 100 can hold four holding boxes 90. Thus, the holding member 100 can hold a maximum of 64 containers 80.

### <<<Details of Holding Room 30>>>

Now, referring to Figs. 3 and 4, details of a holding room 30a for holding the holding member 100 are described. The inner chamber 60 defining the holding room 30a, which is a first embodiment of the holding room 30, is provided with support members 150 to 155 and 160 to 165 which support six holding members 100a to 100f, respectively.

Specifically, the six support members 150 to 155 are attached, at predetermined intervals, to a side wall 201 extending vertically from a bottom 200 of the inner chamber 60. The support members 160 to 165 are attached to a side wall 202 facing the side wall 201 and extending vertically from the bottom 200 such that the support member 160 to 165 face their counterpart support members 150 to 155, respectively. Specifically, the support members 160 to 165 are attached at the same heights as the heights of their counterpart support members 150 to 155, respectively.

In an embodiment of the present disclosure, the support members 150 and 160 support the holding member 100a; the support members 151 and 161 support the holding member 100b; the support members 152 and 162 support the holding member 100c; the support members 153 and 163 support the holding member 100d; the support members 154 and 164 support the holding member 100e; and the support members 155 and 165 support the holding member 100f.

In addition, plate-shaped members 300a to 300f are placed between the side walls 201 and 202 of the inner chamber 60 that defines the holding room 30a.

### <<<Details of Plate-shaped Member 300a and Antennas 400>>>

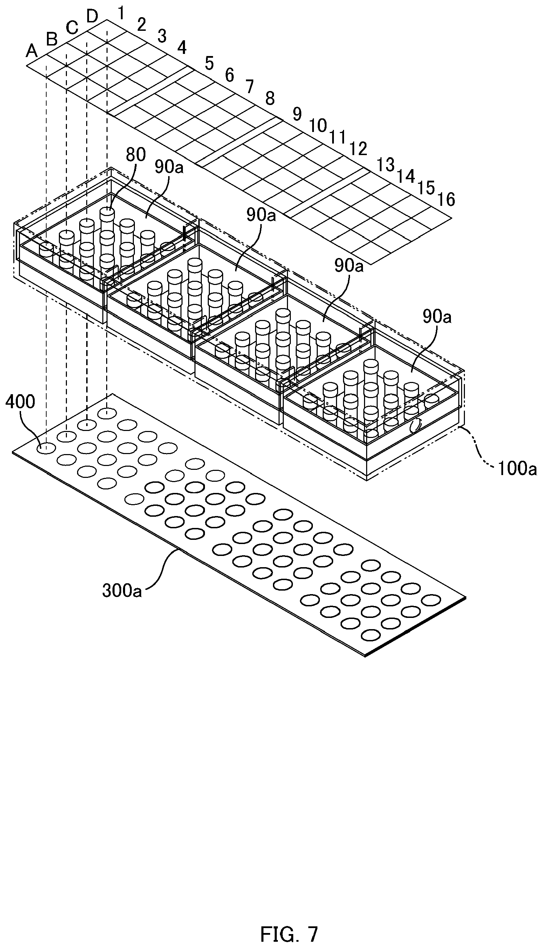

Fig. 7 is a diagram for explaining a positional relationship between the plate-shaped member 300a and the holding member 100a being held in the holding room 30a. The term "being held" refers to a state in which the holding member 100a is held at a predetermined position in the holding room 30a such that the holding room 30a can be hermetically closed with the insulated door 62. To clarify the positional relationship between the holding member 100a and the plate-shaped member 300a, the holding room 30a and other members are omitted and the diagram is drawn out of scale, with the distance from the bottom of the holding member 100a to the surface of the plate-shaped member 300a longer.

The plate-shaped member 300a has 64 antennas 400 on its surface, which receive information on the RF tags 85. The antennas 400 are some of the antennas of the antenna array 41 described above.

With the holding room 30a hermetically closed, the holding member 100a is held at a predetermined position in the holding room 30a, and thus holding boxes 90a to 90d in the holding room 30a are also held in place. In addition, as described above, each of the holding boxes 90a to 90d can hold 16 containers 80. Thus, with the holding member 100a holding the holding boxes 90a to 90d being held at a predetermined position, the containers 80 (a plurality of containers) each are held at one of the positions A1 to D16 (a plurality of predetermined positions) in the holding room 30a.

The "positions A1 to D16" are 64 positions at which the containers 80 can be held in the holding room 30a when the four holding boxes 90a to 90d are placed in the holding member 100a. These positions are identified by combinations of 4 positions in the width direction (alphabets A to D) and 16 positions in the longitudinal direction (numbers 1 to 16) of the holding member 100a.

The 64 antennas 400 of the plate-shaped member 300a are provided at positions denoted by A1 to D16, respectively. In other words, the 64 antennas 400 (a plurality of antennas) are provided at positions at which information on the 64 RF tags 85 (a plurality of RF tags) respectively attached to the 64 containers 80 (a plurality of containers) held in the holding member 100a can be received.

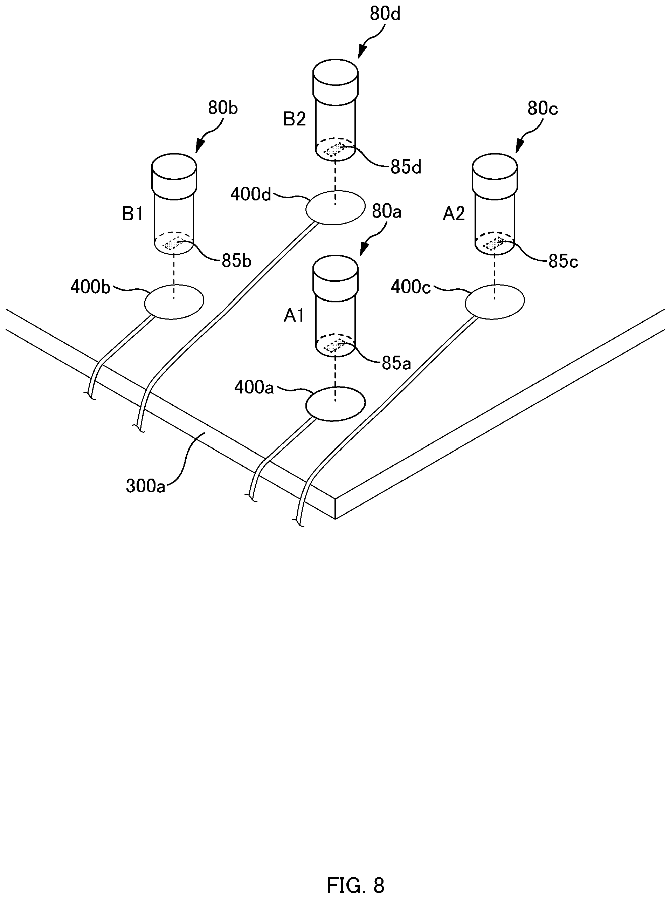

Fig. 8 is a diagram for explaining in detail the positions at which the antennas 400 are provided. In Fig. 8, out of 64 antennas 400 in the plate-shaped member 300a, antennas 400a to 400d provided corresponding to the positions A1, B1, A2, and B2, respectively, are depicted. For convenience, the holding box 90 and the holding member 100 are omitted here.

The antennas 400a to 400d are provided on the surface of the plate-shaped member 300a at positions corresponding to the positions A1, B1, A2, and B2, respectively, at which the containers 80a to 80d are held, respectively. In other words, the antennas 400a to 400d are provided at positions at which information on RF tags 85a to 85d at the positions A1, B1, A2, and B2, respectively, can be received.

The antennas 400a to 400d are, for example, circular pattern antennas each having a diameter allowing it to acquire only the information stored in the corresponding RF tag. Thus, the antenna 400a acquires the information on (identification code for) the RF tag placed at the position A1, but does not acquire the information on the RF tags placed at other positions.

While the 4 antennas 400a to 400d out of the 64 antennas 400 have been described, the same applies to other antennas as well. Thus, each of the 64 antennas 400 acquires only the identification code for the RF tag 85 at the corresponding position.

While the plate-shaped member 300a has been described in detail, the description of the plate-shaped member 300a can equally apply to the plate-shaped members 300b to 300f. Specifically, the plate-shaped members 300b to 300f each are provided with corresponding antennas of antennas 401 to 405 which are similar to the antennas 400. Each set of the antennas 400 to 405 includes 64 antennas. Accordingly, in an embodiment of the present disclosure, 384 antennas (384 = 64 x 6) in total are provided in the holding room 30a.

### <<<Details of Insulated Room 31>>>

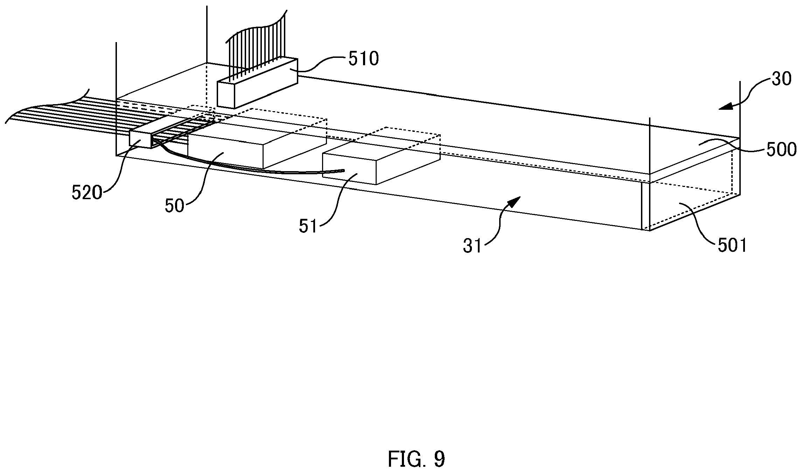

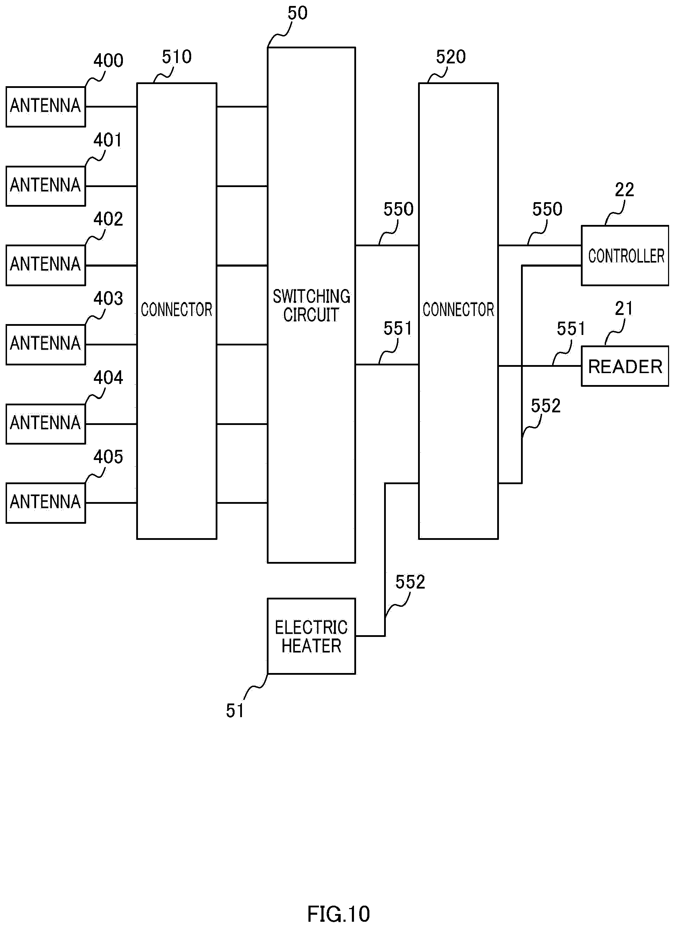

Fig. 9 is a diagram for explaining details of the insulation chamber 31, and Fig. 10 is a diagram for explaining details of the switching circuit 50 and the electric heater 51.

As illustrated in Fig. 9, part of the lower space of the holding room 30a is partitioned by insulating materials 500 and 501 to form a hermetic insulated room 31. A connector 510 is attached to the insulating material 500. The switching circuit 50, the electric heater 51, and a connector 520 are provided in the insulated room 31.

The connector 510 is a component for connecting lines of the antennas 400 to 405 to the switching circuit 50 provided in the insulated room 31. The connector 520 is a component for directing the lines from the switching circuit 50 and the electric heater 51 out of the freezer.

The switching circuit 50 (a switching unit) is connected to all the lines of the antennas 400 to 405 via the connector 510. The switching circuit 50 is also connected, via the connector 520, to a line 550 for transmitting a switch command (a predetermined command) to switch the antennas 400 to 405 and a line 551 for operating a selected antennas or antennas among the antennas 400 to 405 and reading information. The line 550 extends from the controller 22 and the line 551 extends from the reader 21. As a result, the switching circuit 50 connects any of the antennas 400 to 405 to the reader 21 in response to a switch command from the controller 22.

To the electric heater 51 (heater), a line 552 for operating the electric heater 51 is connected via the connector 520. The line 552 extends from the controller 22. Thus, the electric heater 51 can raise the temperature of the switching circuit 50 provided inside the freezer 20 in response to a command from the controller 22.

### <<<<Inventory Process>>>>

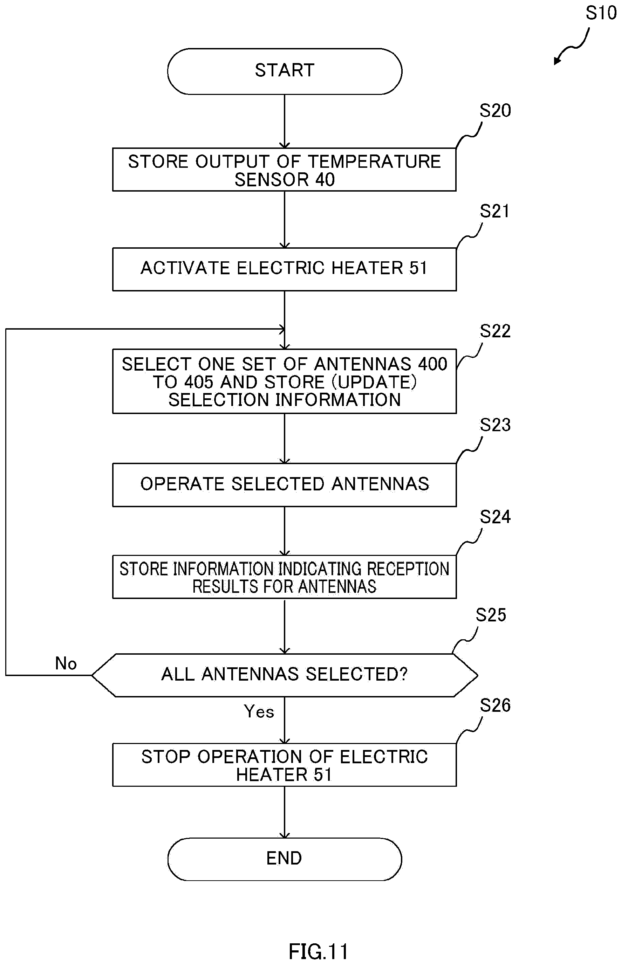

Fig. 11 is a flowchart illustrating an example of a process S10 (hereinafter, referred to as an "inventory process S10") to acquire information about the containers 80 held in the holding room 30a. It is assumed herein that the holding members 100a to 100f holding the containers 80 are housed at respective predetermined positions in the holding room 30a and the holding room 30a is hermetically closed.

First, the controller 22 acquires an output of the temperature sensor 40 and stores it in the storage 23 (S20). As a result, the storage 23 stores temperature information indicating the temperature of the holding room 30a at the time when the inventory process S10 is executed. The controller 22 then activates the electric heater 51 (S21). As a result, the switching circuit 50 is heated and the switching circuit 50 can perform desired operations.

The controller 22 operates the switching circuit 50 to select one set of antennas from the antennas 400 to 405, and stores selection information indicating the selected antennas in the storage 23 (S22). Here, by way of example, when the antennas 400 are selected, the antennas 400 (first antennas) are connected to the reader 21 (a first state). In addition, the selection information indicating that the antennas 400 have been selected is stored in the storage 23.

The reader 21 operates the selected antennas (S23). For example, when the antennas 400 are selected, each of the 64 antennas 400 emits radio waves, as illustrated in Fig. 7. The reader 21 then stores information indicating reception results for the selected antennas in the storage 23 (S24).

Here, the "information indicating reception results for antennas" is described for a case where the container 80a with the RF tag 85a is held at the position A1 in Fig. 7 and nothing is held at the position A2. In this case, the reader 21 acquires an identification code (e.g., "00001") of the RF tag 85a via the antenna 400a, and stores it in the storage 23. On the other hand, the reader 21 stores, in the storage 23, information (e.g., "Null") indicating that nothing has been received because there is no RF tag at the position A2. The antennas 400a and 400b respectively corresponding to the positions A1 and A2 have been described here, but the same applies to other 62 antennas 400. The reader 21 acquires the "information indicating reception results for antennas" corresponding to the 64 antennas 400 and stores the information in the storage 23. Thus, a user can appropriately grasp what kind(s) of specimen(s) is/are contained in the container(s) 80 and where the container(s) 80 is/are held among the positions A1 to D16 in the holding room 30a, without taking the container(s) 80 out of the freezer.

The controller 22 then determines whether all the antennas 400 to 405 have been selected (S25). If there is any antenna not having been selected (S25: No), the controller 22 selects the unselected antennas based on the selection information stored in the storage 23, and updates the selection information (S22). For example, if the antennas 401 have not yet been selected, the antennas 401 are selected and the switching circuit 50 connects the antennas 401 (second antennas) and the reader 21 (a second state). Then, by repeating steps S22 to S25, all of the antennas 400 to 405 result in being selected and operated. Since each set of the antennas 400 to 405 includes 64 antennas, eventually, 384 pieces of the "information indicating reception results for antennas" are stored in the storage 23. Accordingly, with the holding room 30a hermetically closed, a user can appropriately grasp what kind(s) of container(s) 80 is/are held and where the container(s) is/are held among the 384 positions in the holding room 30a.

On the other hand, if all the antennas have been selected (S25: Yes), the controller 22 stops the operation of the electric heater 51 (S26) and ends the inventory process S10.

### = = = = Other embodiments = = = =

### <<Case where Holding Member 101 is used>>

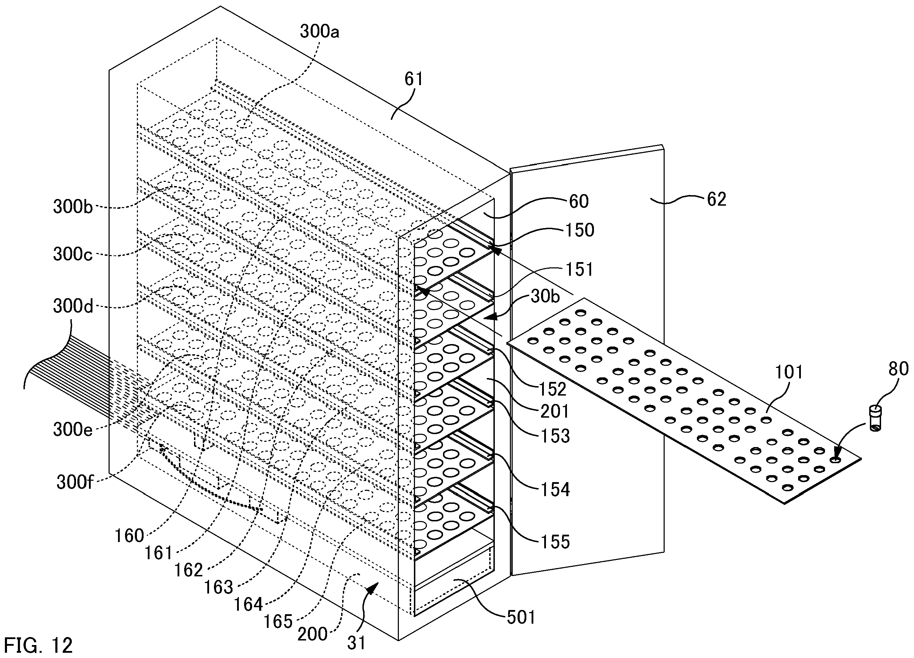

By way of example, in an embodiment of the present disclosure, the holding member 100 is used to hold the holding box 90, but the present disclosure is not limited thereto. For example, a holding member 101 that can directly hold containers 80 illustrated in Fig. 12 may be used. Even when such a holding member 101 is used, each container 80 will be held at one of the positions A1 to D16 (a plurality of predetermined positions) in a holding room 30b which is a second embodiment of the holding room 30.

### <<Case where Plate-shaped Member 310 is located below Holding Member 102>>

For example, in embodiments illustrated in Figs. 3 and 12, the antennas 400 are respectively provided for the 64 containers 80 that are to be held in the single holding member 100. The present disclosure, however, is not limited thereto. For example, the present disclosure may have a configuration in which a plate-shaped member (described below) having fewer antennas than the containers 80 is moved to read the RF tags 85 on all the containers 80.

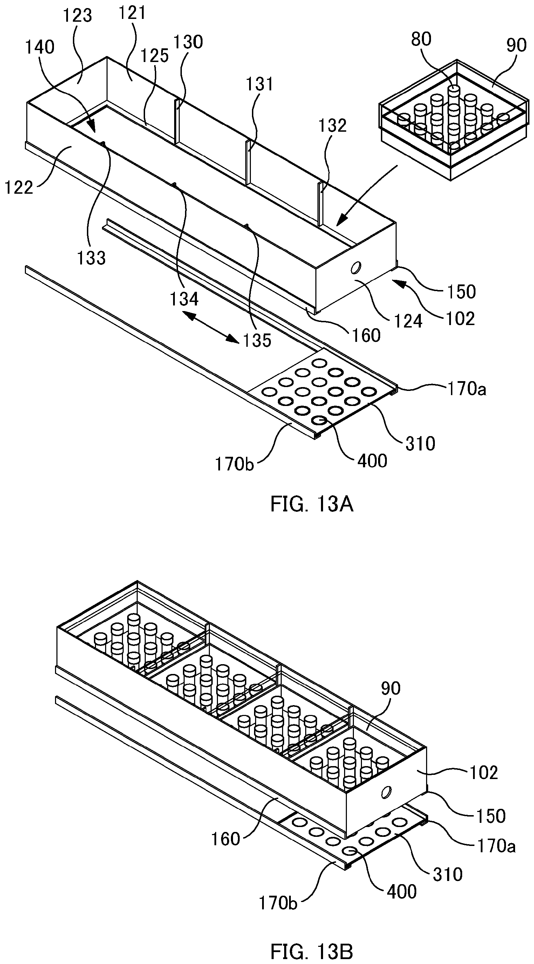

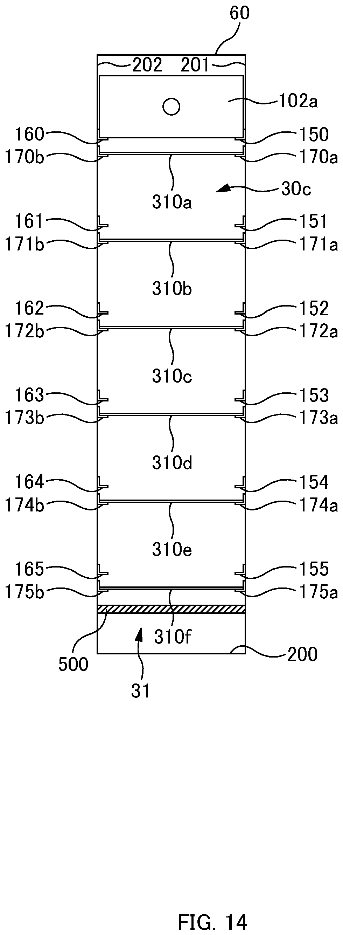

Figs. 13A and 13B are diagrams for explaining a plate-shaped member 310 and a holding member 102 held in a holding room 30c (described below). In Fig. 13A, the holding member 102 and the plate-shaped member 310 are illustrated with a distance therebetween to clarify the configurations of these members. Fig. 14 is a diagram for explaining the holding room 30c which is a third embodiment of the holding room 30.

The holding member 102 is a rectangular parallelepiped box-shaped member having openings in top and bottom, respectively, and can hold four holding boxes 90. The holding member 102 is formed by being surrounded by five flat plates in total: a bottom plate 125 with an opening 140, side plates 121 and 122, a back plate 123, and a front plate 124. The holding member 102 is provided with a partitioning plates 130 to 135 for allowing the holding boxes 90 to be held at predetermined holding positions in the holding member 102.

The members denoted by the same reference numerals between the holding member 100 and the holding member 102 are the same. For this reason, only the bottom plate 125 is described in detail here.

The bottom plate 125 has, at its center, the opening 140 having a large area. This allows the antennas 400 to read the information on the RF tag 85 with greater accuracy when the holding boxes 90 are placed in the holding member 102.

The plate-shaped member 310 has 16 antennas 400 on its top surface. A motor (not illustrated) for moving the plate-shaped member 310 along the longitudinal direction of support members 170 (described below) are attached to the plate-shaped member 310. The motor for sliding the plate-shaped member 310 operates in response to, for example, a command from the controller 22.

Fig. 14 is a diagram for explaining the holding room 30b in which the holding member 102 and the plate-shaped members 310 are held. The holding room 30b holds six holding members 102a to 102f and six plate-shaped members 310a to 310f. Specifically, the holding room 30b is provided with support members 150 to 155 and 160 to 165 which support the holding members 102a to 102f, and support members 170 to 175 which support the plate-shaped members 310a to 310f, respectively.

In Figs. 4 and 14, the members denoted by the same reference numerals are the same. The support members 150 and 160 support the holding member 102a; the support members 151 and 161 support the holding member 102b; the support members 152 and 162 support the holding member 102c; the support members 153 and 163 support the holding member 102d; the support members 154 and 164 support the holding member 102e; and the support members 155 and 165 support the holding member 102f.

Support members 170a to 175a are located under the support members 150 to 155, respectively, and support members 170b to 175b are located under the support members 160 to 165, respectively. Specifically, the six support members 170a to 175a are attached, at predetermined intervals, to the side wall 201 extending vertically from the bottom 200 of the inner chamber 60. The six support members 170b to 175b are attached, at predetermined intervals, to the side wall 202 extending vertically from the bottom 200, so as to face their counterpart support members 170a to 175a, respectively.

The support members 170a and 170b support the plate-shaped member 310a; the support members 171a and 171b support the plate-shaped member 310b; the support members 172a and 172b support the plate-shaped member 310c; the support members 173a and 173b support the plate-shaped member 310d; the support members 174a and 174b support the plate-shaped member 310e; and the support members 175a and 175b support the plate-shaped member 310f.

In an embodiment of the present disclosure, by way of example, when the position of the plate-shaped member 310a is adjusted by a motor (not illustrated) with the support members 170a and 170b supporting the plate-shaped member 310a, antennas 400 on the plate-shaped member 310a can acquire information on the RF tags 85 on the 16 containers 80. The controller 22 then slides the plate-shaped member 310a along the longitudinal direction of the support members 170a and 170b such that the information on the RF tags 85 of all the containers 80 in the holding member 102a is acquired.

As a result, even when fewer antennas 400 are provided than the containers as distinct from the case of the plate-shaped member 300, where the antennas 400 are provided for all the 64 containers 80, respectively, a user can obtain information about the containers 80 held in the holding room 30b while preventing deterioration in the quality of the specimens in the containers 81 that are held in place.

While the plate-shaped member 310a described is assumed to have 16 antennas 400, the number of the antennas is not limited to 16. Instead, a different number of antennas may be used, such as four corresponding to a single row of containers 80, eight corresponding to two rows of containers 80, and so on. In an embodiment of the present disclosure, while the plate-shaped member 310a is supported by two support members 170a and 170b, the present disclosure may be implemented with, for example, the plate-shaped member 310a configured to slide on a single rail member that supports the plate-shaped member 310a at the center thereof.

### <<Case where Plate-shaped Member 310 is located above Holding Member 102>>

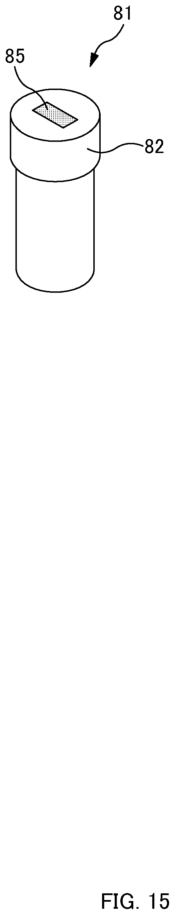

Fig. 15 is a diagram illustrating an example of a container 81 that holds a specimen (not illustrated). Similarly to the container 80, the container 81 is a cylindrical container with a removable lid 82 for hermetically closing the container 81 attached thereto. An RF tag 85 is attached to the top surface of the lid 82.

In such a case, an antenna 400 for acquiring information on the RF tag 85 needs to be provided above the container 81.

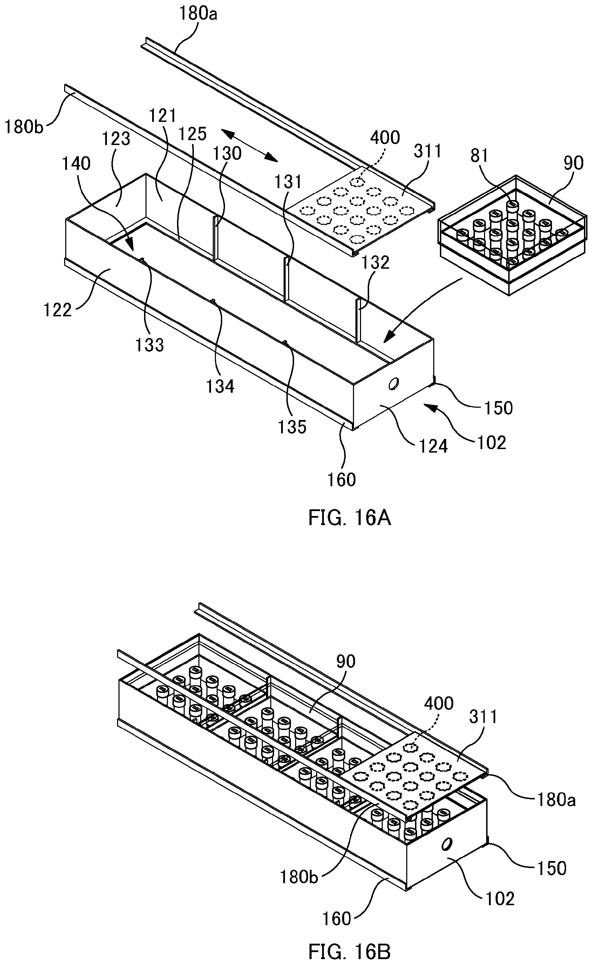

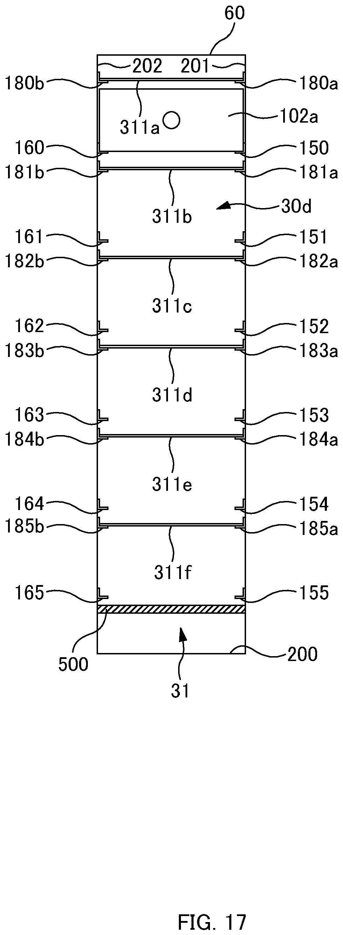

Figs. 16A and 16B are diagrams for explaining a plate-shaped member 311 and the holding member 102 held in a holding room 30d (described below). In Fig. 16A, the holding member 102 and the plate-shaped member 311 are illustrated with a distance therebetween to clarify the configurations of these members. Fig. 17 is a diagram for explaining the holding room 30d which is a fourth embodiment of holding room 30.

In Figs. 16A and 16B, the components and parts that are the same as those illustrated in Figs. 13A and 13B are denoted by the same reference numerals. Accordingly, a description will be given focusing on the plate-shaped member 311 and support members 180 to 185 that support the plate-shaped member 311.

The plate-shaped member 311 has 16 antennas 400 on its lower surface. A motor (not illustrated) for moving the plate-shaped member 311 along the longitudinal direction of support members 180 (described below) are attached to the plate-shaped member 311. The motor for sliding the plate-shaped member 311 operates in response to, for example, a command from the controller 22.

Support members 180a to 185a are located above the support members 150 to 155, respectively, and support members 180b to 185b are located above the support members 160 to 165, respectively. Specifically, the six support members 180a to 185a are attached, at predetermined intervals, to the side wall 201 extending vertically from the bottom 200 of the inner chamber 60.

The six support members 180b to 185b are attached, at predetermined intervals, to the side wall 202 extending vertically from the bottom 200, so as to face their counterpart support members 180a to 185a, respectively. Specifically, the support members 180b to 185b are attached at the same heights as the heights of their counterpart support members 180a to 185a, respectively.

The support members 180a and 180b support the plate-shaped member 311a; the support members 181a and 181b support the plate-shaped member 311b; the support members 182a and 182b support the plate-shaped member 311c; the support members 183a and 183b support the plate-shaped member 311d; the support members 184a and 184b support the plate-shaped member 311e; and the support members 185a and 185b support the plate-shaped member 311f.

In an embodiment of the present disclosure, by way of example, when the position of the plate-shaped member 311a is adjusted by a motor (not illustrated) with the support members 180a and 180b supporting the plate-shaped member 311a, antennas 400 on the plate-shaped member 311a can acquire information on the RF tags 85 on the 16 containers 81. The controller 22 then slides the plate-shaped member 311a along the longitudinal direction of the support members 180a and 180b such that the information on the RF tags 85 of all the containers 81 in the holding member 102a is acquired.

As a result, even when fewer antennas 400 are provided than the containers as distinct from the case of the plate-shaped member 300, where the antennas 400 are provided for all the 64 containers 80, respectively, a user can obtain information about the containers 81 held in the holding room 30c while preventing deterioration in the quality of the specimens in the containers 81 that are held in place.

While the plate member 311a described is assumed to have 16 antennas 400, the number of the antennas is not limited to 16. Instead, a different number of antennas may be used, such as four corresponding to a single row of containers 81, eight corresponding to two rows of containers 81, and so on.

### <<Case where Holding Devices 70 and 71 are placed in Holding Room 30>>

In an embodiment of the present disclosure, the holding boxes 90 are held in the holding members 100 and 102 which are drawable, and placed in the holding room 30, however, the present disclosure is not limited thereto.

### <Holding Device 70>

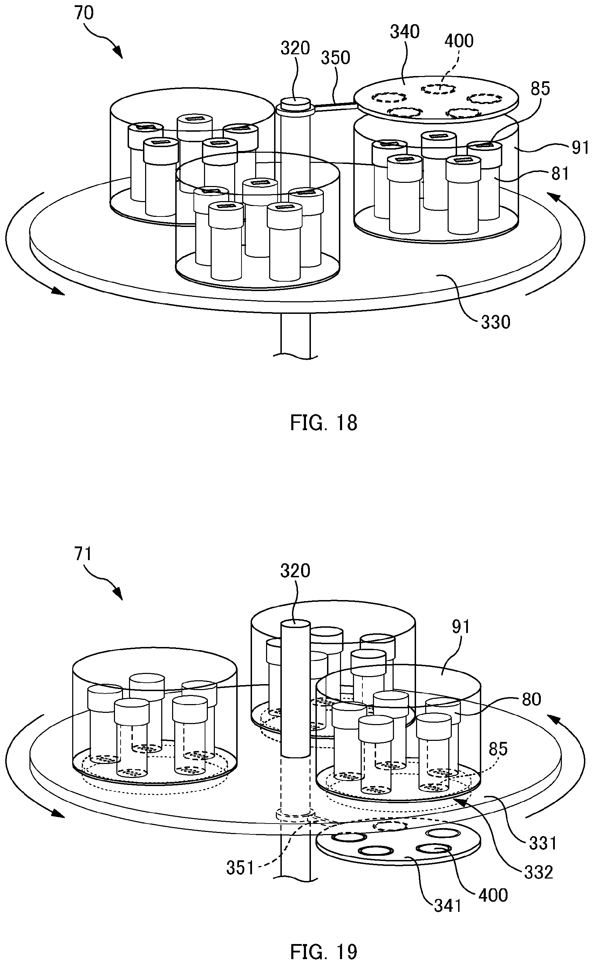

Fig. 18 is a diagram illustrating an example of a holding device 70 provided in the holding room 30 in which holding boxes 91 are held. The holding boxes 91 each are a cylindrical box capable of holding five containers 81 described above. For convenience, a lid covering each holding box 91 is omitted here.

The holding device 70 is provided in, for example, the holding room 30 and has a shaft member 320, a rotatable plate 330, a plate-shaped member 340, and a mounting member 350. The shaft member 320 is attached to extend along a vertical direction from near the center of the bottom surface of the holding room 30. The rotatable plate 330 is a circular turntable rotatable about the shaft member 320, and is mounted so as to be rotatable about the shaft member 320. For example, three holding boxes 91 are placed on the rotatable plate 330 at equal intervals.

Near the tip of the shaft member 320, the plate-shaped member 340 with antennas 400 formed on its back surface is attached to the shaft member 320 via the mounting member 350. The plate-shaped member 340 is attached to the shaft member 320 in such a manner that the back surface of the plate-shaped member 340 and the surface of the rotatable plate 330 are substantially parallel to each other.

Then, when the rotatable plate 330 is rotated by a motor (not illustrated) and moved to a predetermined position at which, for example, the center of a holding box 91 on the rotatable plate 330 coincides with the center of the circular plate-shaped member 340, the five containers 81 in the holding box 91 move to positions (predetermined positions) respectively corresponding to the five antennas 400 on the plate member 340. The motor of the rotatable plate 330 (not illustrated) operates in response to, for example, a command from the controller 22.

As a result, a user can obtain information about the containers 81 held in the holding room 30 while preventing deterioration in the quality of the specimens in the containers 81.

### <Holding Device 71>

Fig. 19 is a diagram illustrating an example of a holding device 71, provided in the holding room 30. The holding device 71 is provided in, for example, the holding room 30 and has a shaft member 320, a rotatable plate 331, a plate-shaped member 341, and a mounting member 351. In Figs. 18 and 19, since the components and parts denoted by the same reference numerals are identical, the rotatable plate 331, the plate-shaped member 341, and the mounting member 351 are described here.

The rotatable plate 331 is a circular turntable rotatable about the shaft member 320, and is mounted so as to be rotatable about the shaft member 320. The rotatable plate 331 has, for example, three openings 332 evenly spaced apart from each other, and the holding boxes 91 are placed so as to cover the respective openings 332. This makes it easier for the antennas 400 to acquire information on the RF tags 85 on the containers 80 in the holding boxes 91.

The plate-shaped member 341 with the antennas 400 formed on its upper surface is attached to a lower portion of the shaft member 320 to which the rotatable plate 331 is attached, via the mounting member 351. The plate-shaped member 341 is attached to the shaft member 320 in such a manner that the surface of the plate-shaped member 341 and the back surface of the rotatable plate 331 are substantially parallel to each other.

Then, when the rotatable plate 331 is rotated by a motor (not illustrated) and moved to a predetermined position at which, for example, the center of a holding box 91 on the rotatable plate 331 coincides with the center of the circular plate-shaped member 341, the five containers 80 in the holding box 91 move to positions (predetermined positions) respectively corresponding to the five antennas 400 on the plate-shaped member 341.

As a result, a user can obtain information about the containers 80 held in the holding room 30 while preventing deterioration in the quality of the specimens in the containers 80.

In Figs. 18 and 19, the number of containers held in the holding box 91 and the number of antennas 400 formed on the plate-shaped member are five, but the number thereof may be different.

### <<Others>>

In an embodiment of the present disclosure, the insulated room 31 is defined within the holding room 30, however, the present disclosure is not limited thereto. For example, it may be possible to provide the switching circuit 50 and the electric heater 51 in the holding room 30 without forming the insulated room 31. Even in such a case, the switching circuit 50 is heated by the electric heater 51 and thus the switching circuit 50 can be operated properly.

In an embodiment of the present disclosure, the switching circuit 50 and the electric heater 51 are provided in the insulated room 31, the present disclosure is not limited thereto. For example, the electric heater 51 does not necessarily need to be provided when the temperature in the insulated room 31 will not fall below the lower limit of the temperature of a compensation temperature range (e.g., -40°C) of the switching circuit 50.

The freezer 20 is designed to lower the temperature inside the freezer to, for example, -80°C (predetermined temperature), however, the freezer may be the one that cools to -40°C, for example. Even in such a freezer, installing the switching circuit 50 in the insulated room 31 or heating the switching circuit 50 also leads to stable operations of the switching circuit 50.

For example, a multiplexer is used for the switching circuit 50, however, the present disclosure is not limited thereto. Instead, a microcontroller, a relay, or the like may be used.

In an embodiment of the present disclosure, the reader 21, the controller 22, and the storage 23 are provided separately from the freezer 20, however, they may be incorporated into the freezer 20, for example.

The insulated room 31 is formed over the entire surface of the bottom 200 of the holding room 30, however, the present disclosure is not limited thereto. The insulated room 31 may be formed by dividing the space in the holding room 30.

### == Summary ==

The freezing system 10 according to an embodiment of the present disclosure has been described above. The holding room 30 of the freezer 20 is provided with the antennas 400 to 405 capable of receiving information on the RF tags 85 attached to the containers 80. Accordingly, with the use of the freezing system 10, it is possible to acquire information on the RF tags 85 on the multiple containers 80 with the multiple containers 80 being held in the holding room 30. Thus, in an embodiment of the present disclosure, a user can obtain information about the containers 80 held in the holding room 30 while preventing deterioration in the quality of the specimens held in the containers 80.

In addition, in an embodiment of the present disclosure, the switching circuit 50 connects any of the antennas 400 to 405 to the reader 21. Accordingly, the number of lines drawn out from the freezer 20 can be reduced as compared to cases where all the lines of the antennas 400 to 405 are connected to the reader 21. Thus, in an embodiment of the present disclosure, it is possible to avoid complicated wiring between the freezer 20 and the reader 21.

The switching circuit 50 includes a digital circuit manufactured using a semiconductor, for example. When the switching circuit 50 is placed in the holding room 30 that is to be cooled to -80°C, the temperature of the digital circuit may be lower than the lower limit of its compensation temperature range (e.g., -40°C) and the switching circuit 50 may not operate correctly. In an embodiment of the present disclosure, however, the switching circuit 50 is placed in the insulated room 31. Thus, even when the temperature of the holding room 30 is to be extremely low, the switching circuit 50 can operate correctly.

In addition, in an embodiment of the present disclosure, the electric heater 51 is provided to heat the switching circuit 50. Thus, the temperature of the switching circuit 50 can be kept within its compensation temperature range, which ensures the switching circuit 50 to operate reliably.

In an embodiment of the present disclosure, when the inventory process S10 is executed and information about the containers held in the holding room 30 is acquired, temperature information indicating the temperature in the holding room 30 is stored (S20). Thus, a user can get correct information about the containers 80 held in the holding room 30 as well as the exact temperature at which the containers 80 are held.

The holding member 100a is supported by the support members 150 and 160 such that the containers 80 are held at predetermined positions (e.g., the positions A1 to D16) in the holding room 30. Thus, in an embodiment of the present disclosure, the antennas 400 corresponding to the predetermined positions (e.g., the positions A1 to D16) can reliably receive the information on the RF tags 85.

Embodiments of the present disclosure described above are simply to facilitate understanding of the present disclosure and are not in any way to be construed as limiting the present disclosure. The present disclosure may variously be changed or altered without departing from its essential features and encompass equivalents thereof.

### [Reference Signs List]

10 freezing system, 20 freezer, 21 reader,
22 controller, 23 storage, 30 holding room,
31 insulated room, 32 cooler, 40 temperature sensor,
41 antenna array, 50 switching circuit, 51 electric heater,
60 inner chamber, 61 outer chamber, 62 insulated door,
80, 81 container, 70, 71 holding device, 82 lid, 85 RF tag,
90, 91 holding box, 100, 101, 102 holding member,
150-155, 160-165, 170-175, 180-185 support member,
300, 310, 311, 340, 341 plate-shaped member, 320 shaft member,
330, 331 rotatable plate, 350, 35 mounting member,
400-405 antenna, 500, 501 insulating material,
510, 520 connector

## Claims

1. A freezing system comprising:
a freezing device comprising:
a holding room for holding a plurality of containers, the plurality of containers each having an RF tag assigned thereto; containing a material to be cooled; and being held at corresponding one of predetermined positions; and
a plurality of antennas provided inside the holding room each corresponding to one of the predetermined positions, the plurality of antennas each being configured to receive information stored in the RF tag; and
an acquisition unit configured to acquire information received by the plurality of antennas, with the plurality of containers being held in the holding room.

2. The freezing system according to claim 1, wherein
the freezing device further comprises a switching unit for switching a state between a first state and a second state in response to a predetermined command, the switching unit being provided inside the holding room, the first state being a state in which a plurality of first antennas included in the plurality of antennas are connected to the acquisition unit, the second state being a state in which a plurality of second antennas included in the plurality of antennas are connected to the acquisition unit, and
the acquisition unit acquires information received by the plurality of first antennas in the first state, and acquire information received by the plurality of second antennas in the second state.

3. The freezing system according to claim 2, wherein the freezing device comprises an insulated room in which the switching unit is placed, the insulated room being provided in the holding room.

4. The freezing system according to claim 2 or 3, wherein the freezing device further comprises a heater to heat the switching unit.

5. The freezing system according to any one of claims 1 to 4, wherein the acquisition unit acquires information received by the plurality of antennas and temperature information indicating a temperature in the holding room.

6. The freezing system according to any one of claims 1 to 5, wherein the freezing device comprises:
a holding member for holding at least one holding box at a predetermined holding position, the holding box being configured to hold a predetermined number of containers out of the plurality of containers;
a support member for supporting, in the holding room, the holding member for holding the holding box such that the predetermined number of containers held in the holding box each are placed at corresponding one of the predetermined positions; and
a plate-shaped member provided inside the holding room, the plate-shaped member being located on a bottom surface side of the holding member when the holding member is supported by the support member, the plate-shaped member having a surface on which the plurality of antennas are provided.
